# EUROPEAN PATENT APPLICATION

(11) **EP 1 065 679 A2**
(43) Date of publication of application: **03.01.2001**
(21) Application number: 00113565.6
(22) Date of filing: 27.06.2000
(51) Int. Cl.: H01F 10/12, G11B 5/127, G11B 5/187

(54) **Soft magnetic thin film and magnetic head incorporating the same**

(30) Priority: 28.06.1999 JP 18256299
(71) Applicant: SONY CORPORATION, Tokyo (JP)
(72) Inventor: Inoue, Yoshihiko, Shinagawa-ku, Tokyo (JP); Honda, Junichi, Shinagawa-ku, Tokyo (JP); Tokutake, Fusashige, Shinagawa-ku, Tokyo (JP); Suzuki, Atsushi, Shinagawa-ku, Tokyo (JP)
(74) Representative: MÜLLER & HOFFMANN Patentanwälte

(57) **Abstract**

A soft magnetic thin film excellent in a high saturation magnetic flux density, soft magnetic characteristics and corrosion resistance. The soft magnetic thin film is made of a material expressed by a composition formula FeₐSi_{b}Ta_{c}Ru_{d}GaₑN_{f} (where each of a, b, c, d, e and f is a value indicating the atom% of the corresponding element), wherein the composition ranges are as follows:
62 atom% < a < 75 atom%
7 atom% < b < 18 atom%
3 atom% < c < 10 atom%
0 atom% ≤ d < 10 atom%
0 atom% ≤ e < 6 atom%
5 atom% < f < 12 atom%, and
b + c > 13 atom%.

## Description

### BACKGROUND OF THE INVENTION

### Field of the Invention

The present invention relates to a soft magnetic thin film for use in a magnetic head for recording/reproducing information with respect to a high coercive-force magnetic recording medium, such as an evaporated tape. More particularly, the present invention relates to a microcrystal deposition soft magnetic thin film having both high saturation magnetic flux density and a satisfactory soft magnetic characteristic and a magnetic head incorporating the soft magnetic thin film.

### Description of the Related Art

In recent years, the recording density of recording signals has been raised in the magnetic recording industrial field. Therefore, a magnetic recording medium having large coercive force and a high residual magnetic flux density has been used. The foregoing magnetic recording medium is exemplified by a so-called evaporated tape incorporating a non-magnetic support member which is directly coated with, for example, a ferromagnetic metal material.

It leads to a fact that the magnetic head must incorporate a core made of a material having a high saturation magnetic flux density and a high magnetic permeability.

To meet the foregoing requirement, a so-called metal-in-gap (MIG) magnetic head has been suggested. The MIG magnetic head incorporates a sub-core material made of ferrite. Moreover, a main core material is formed on the ferrite layer, the main core material being constituted by a thin metal magnetic film exhibiting a high saturation magnetic flux density. That is, the gap portion is constituted by the thin metal magnetic film. The MIG magnetic head is a satisfactory magnetic head to recording/reproduce information with respect to an evaporated tape.

The magnetic head of the foregoing type permits a satisfactory recording/reproducing process to be performed with respect to a recording medium, such as the evaporated tape, having large coercive force because the recording density has considerably been raised in recent years. Therefore, the magnetic head must be made of a metal magnetic material in order to incorporate a sufficient large recording magnetic field. Moreover, a satisfactory soft magnetic characteristic is required even in a high frequency region.

Under the foregoing circumstance, practical use of a thin microcrystal metal magnetic film mainly composed of Fe has been started as a substitute for the conventional metal magnetic material of the magnetic head. The reason for this lies in that the thin microcrystal metal magnetic film has a high saturation magnetic flux density and an excellent soft magnetic characteristic.

The Fe-base thin microcrystal metal magnetic film has a structure that microcrystal having a composition like pure iron constitutes substantially the overall volume of the thin film. Therefore, the foregoing thin film suffers from unsatisfactory corrosion resistance. Thus, there arises a problem in that the reliability of a device incorporating the foregoing Fe-base thin microcrystal metal magnetic film deteriorates.

### SUMMARY OF THE INVENTION

In view of the foregoing, an object of the present invention is to provide a soft magnetic thin film which is capable of overcoming the foregoing problems experienced with the conventional technique and which has a high saturation magnetic flux density, an excellent soft magnetic characteristic and sufficient corrosion resistance and a reliable magnetic head incorporating the soft magnetic thin film.

The inventors of the present invention has detected a fact that substitution of a Fe-Ru-Ga-Si alloy exhibiting satisfactory corrosion resistance for the portion of a thin microcrystal metal magnetic film serving as a core realizes a high saturation magnetic flux density, a satisfactory soft magnetic characteristic and sufficient corrosion resistance.

The present invention has been achieved on the basis of the foregoing fact. That is, according to one aspect of the present invention, there is provided a soft magnetic thin film comprising: a material expressed by a composition formula FeₐSi_{b}Ta_{c}Ru_{d}GaₑN_{f} (where each of a, b, c, d, e and f is a value indicating the atom% of the corresponding element), wherein the composition ranges are as follows:
62 atom% < a < 75 atom%
7 atom% < b < 18 atom%
3 atom% < c < 10 atom%
0 atom% ≤ d < 10 atom%
0 atom% ≤ e < 6 atom%
5 atom% < f < 12 atom%, and
b + c > 13 atom%.

According to another aspect of the present invention there is provided a magnetic head comprising: a magnetic core which forms a closed magnetic passage; and a magnetic gap formed in the closed magnetic passage, wherein at least a portion of the magnetic core is constituted by the soft magnetic thin film.

Since the soft magnetic thin film having the above-mentioned composition is constituted by the thin microcrystal metal magnetic film, the soft magnetic thin film according to the present invention has a high saturation magnetic flux density and an excellent soft magnetic characteristic. Moreover, satisfactory corrosion resistance can be realized because the Fe - Ru - Ga - Si alloy is substituted for the portion which serves as the core.

Other objects, features and advantages of the invention will be evident from the following detailed description of the preferred embodiments described in conjunction with the attached drawings.

### BRIEF DESCRIPTION OF THE DRAWINGS

Fig. 1 is a graph showing distribution of magnetic characteristics in a ternary composition graph of Fe - Ta -(Ru + Si + Ga);
Fig. 2 is a graph showing the relationship between the atomic fraction of Fe and corrosion resistance;
Fig. 3 is a graph showing the relationship among Si/(Si + Fe), saturation magnetic flux density Bs and saturation magnetostrictiion constant λs;
Fig. 4 is a schematic perspective view showing an example of the structure of a MIG head;
Fig. 5 is a schematic plan view showing a slide surface of a MIG head with respect to a magnetic recording medium;
Fig. 6 is a graph showing the difference in an overwriting characteristic realized by a MIG heads incorporating various soft magnetic thin films; and
Fig. 7 is a graph showing the difference in the frequency characteristic of reproduced output of MIG heads having various soft magnetic thin films.

### Detailed Description of the Preferred Embodiments

A soft magnetic thin film and a magnetic head according to the present invention will now be described with reference to the drawing.

The soft magnetic thin film according to the present invention is mainly composed of Fe, Si, Ta, Ru, Ga and N.

The soft magnetic thin film comprising: a material expressed by a composition formula FeₐSi_{b}Ta_{c}Ru_{d}GaₑN_{f} (where each of a, b, c, d, e and f is a value indicating the atom% of the corresponding element), wherein the composition ranges are as follows:
62 atom% < a < 75 atom%
7 atom% < b < 18 atom%
3 atom% < c < 10 atom%
0 atom% ≤ d< 10 atom%
0 atom% ≤ e < 6 atom%
5 atom% < f < 12 atom%, and
b + c > 13 atom%.

The soft magnetic thin film according to the present invention is manufactured by using a target having a composition in the form that N is omitted from the foregoing composition. A RF or DC magnetron sputtering is performed in an argon gas atmosphere containing 50 mol% to 20 mol% nitrogen. Then, heat treatment is performed at 450°C to 600°C so that a soft magnetic characteristic is realized.

Tables 1 to 4 show compositions of soft magnetic thin films manufactured by the RF magnetron sputtering processes performed in the argon gas atmosphere containing 10 mol% nitrogen, the compositions being compositions from which nitrogen has been omitted. Moreover, Tables 1 to 4 show coercive force Hc, saturation magnetic flux density Bs and permeability µ_{Hard} realized in a direction of the hard axis after the soft magnetic thin films have been allowed to stand at 550°C for one hour.

**Table 1**

| Atomic Fraction of Soft Magnetic Thin Film without Nitrogen | | | | | | Soft Magnetic Characteristics | | |
|---|---|---|---|---|---|---|---|---|
| Fe (atom%) | Si (atom%) | Ta (atom%) | Ru (atom%) | Ga (atom%) | | Hc (A/m) | Bs (T) | µ_{Hard} (1MHz) |
| 73.6 | 13.1 | 9.5 | 3.0 | 0.8 | | 8.1 | 1.22 | 3415 |
| 67.8 | 13.8 | 8.7 | 9.7 | 0.0 | | 152.4 | 1.22 | 485 |
| 70.3 | 12.8 | 9.2 | 6.9 | 0.8 | | 3.5 | 1.20 | 3725 |
| 69.0 | 10.8 | 9.0 | 11.0 | 0.2 | | 9.4 | 1.16 | 3308 |
| 71.7 | 15.5 | 9.4 | 3.1 | 0.3 | | 0.6 | 1.15 | 5070 |
| 69.7 | 12.4 | 9.2 | 8.7 | 0.0 | | 3.9 | 1.22 | 3954 |
| 77.3 | 13.4 | 6.7 | 2.4 | 0.2 | | 38.1 | 1.43 | 821 |
| 71.6 | 16.3 | 8.9 | 3.2 | 0.0 | | 159.6 | 1.10 | 340 |
| 76.4 | 10.3 | 10.6 | 2.3 | 0.4 | | 61.8 | 1.20 | 1733 |
| 75.3 | 8.2 | 14.5 | 2.0 | 0.0 | | 6623.2 | 0.73 | 7 |
| 77.0 | 11.6 | 9.4 | 2.0 | 0.0 | | 22.2 | 1.44 | 2581 |
| 80.9 | 8.0 | 9.4 | 1.7 | 0.0 | | 234.0 | 1.52 | 367 |

**Table 2**

| Atomic Fraction of Soft Magnetic Thin Film without Nitrogen | | | | | | Soft Magnetic Characteristics | | |
|---|---|---|---|---|---|---|---|---|
| Fe (atom%) | Si (atom%) | Ta (atom%) | Ru (atom%) | Ga (atom%) | | Hc (A/m) | Bs (T) | µ_{Hard} (1MHz) |
| 78.4 | 11.6 | 7.1 | 2.4 | 0.5 | | 110.6 | 1.49 | 337 |
| 76.4 | 13.3 | 7.9 | 2.5 | 0.0 | | 25.8 | 1.37 | 2673 |
| 76.1 | 10.5 | 7.6 | 5.8 | 0.0 | | 32.6 | 1.40 | 1435 |
| 76.4 | 12.2 | 8.9 | 2.4 | 0.0 | | 19.2 | 1.30 | 2399 |
| 78.0 | 7.6 | 9.7 | 4.7 | 0.0 | | 21.9 | 1.34 | 2750 |
| 73.9 | 9.1 | 8.9 | 7.6 | 0.5 | | 20.9 | 1.34 | 2073 |
| 83.0 | 8.7 | 6.1 | 2.2 | 0.0 | | 1114.4 | 1.15 | 74 |
| 77.5 | 11.1 | 8.4 | 3.0 | 0.0 | | 12.8 | 1.32 | 3440 |
| 73.0 | 17.5 | 6.8 | 2.7 | 0.0 | | 41.3 | 1.36 | 451 |
| 70.9 | 18.1 | 7.7 | 3.3 | 0.0 | | 16.4 | 1.25 | 1258 |
| 76.7 | 15.3 | 5.9 | 2.1 | 0.0 | | 331.7 | 1.38 | 93 |
| 72.1 | 18.0 | 7.2 | 2.7 | 0.0 | | 26.6 | 1.31 | 589 |

**Table 3**

| Atomic Fraction of Soft Magnetic Thin Film without Nitrogen | | | | | | Soft Magnetic Characteristics | | |
|---|---|---|---|---|---|---|---|---|
| Fe (atom%) | Si (atom%) | Ta (atom%) | Ru (atom%) | Ga (atom%) | | Hc (A/m) | Bs (T) | µ_{Hard} (1MHz) |
| 74.7 | 16.8 | 6.1 | 2.4 | 0.0 | | 63.3 | 1.42 | 302 |
| 70.5 | 14.3 | 2.3 | 7.6 | 5.3 | | 52.7 | 1.27 | 1111 |
| 70.4 | 15.5 | 1.7 | 7.0 | 5.4 | | 422.0 | 1.34 | 260 |
| 72.1 | 13.4 | 1.7 | 7.2 | 5.7 | | 99.6 | 1.36 | 115 |
| 73.7 | 12.8 | 2.2 | 7.0 | 4.3 | | 312.2 | 1.34 | 223 |
| 72.4 | 13.7 | 2.8 | 6.8 | 4.3 | | 193.5 | 1.36 | 403 |
| 72.5 | 11.0 | 5.3 | 7.0 | 4.2 | | 75.8 | 1.26 | 238 |
| 69.8 | 12.2 | 9.6 | 7.2 | 1.1 | | 0.8 | 1.15 | 1983 |
| 71.0 | 10.8 | 9.3 | 6.8 | 2.1 | | 2.3 | 1.19 | 1449 |
| 71.0 | 11.3 | 8.8 | 6.3 | 2.7 | | 5.0 | 1.19 | 1449 |
| 70.8 | 9.8 | 9.4 | 6.9 | 3.1 | | 1.2 | 1.15 | 2872 |
| 70.8 | 12.7 | 7.5 | 6.5 | 2.6 | | 12.7 | 1.23 | 2633 |

**Table 4**

| Atomic Fraction of Soft Magnetic Thin Film without Nitrogen | | | | | | Soft Magnetic Characteristics | | |
|---|---|---|---|---|---|---|---|---|
| Fe (atom%) | Si (atom%) | Ta (atom%) | Ru (atom%) | Ga (atom%) | | Hc (A/m) | Bs (T) | µ_{Hard} (1MHz) |
| 71.3 | 12.2 | 8.0 | 6.6 | 2.0 | | 16.3 | 1.29 | 2263 |
| 74.5 | 9.4 | 8.7 | 6.3 | 1.1 | | 10.6 | 1.26 | 3077 |
| 73.1 | 9.9 | 6.7 | 6.5 | 3.8 | | 64.0 | 1.29 | 540 |
| 75.3 | 8.5 | 10.2 | 5.6 | 0.4 | | 6.7 | 1.24 | 3410 |
| 72.5 | 11.9 | 9.8 | 5.1 | 0.8 | | 7.5 | 1.25 | 3653 |
| 74.6 | 10.9 | 7.6 | 5.5 | 1.5 | | 24.5 | 1.28 | 1107 |
| 76.4 | 9.4 | 8.1 | 5.0 | 1.0 | | 12.6 | 1.31 | 1497 |
| 76.2 | 8.9 | 7.0 | 5.0 | 2.9 | | 27.9 | 1.35 | 1091 |
| 75.7 | 10.8 | 8.3 | 4.7 | 0.4 | | 12.8 | 1.35 | 1869 |
| 76.2 | 9.2 | 8.3 | 5.4 | 0.9 | | 15.0 | 1.33 | 1638 |
| 73.5 | 12.1 | 8.6 | 4.6 | 1.1 | | 10.8 | 1.28 | 1070 |
| 73.6 | 12.7 | 7.8 | 4.0 | 1.9 | | 7.6 | 1.25 | 1073 |

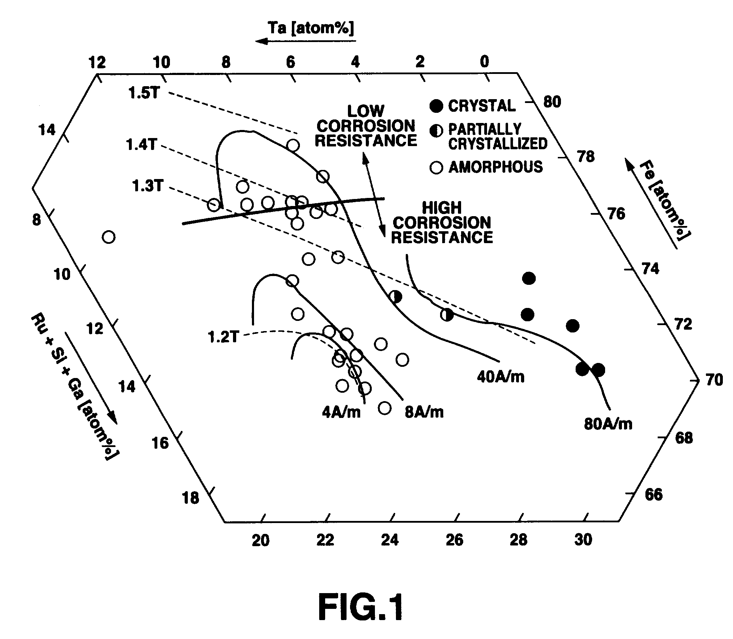

Fig. 1 shows a graph formed by plotting data shown in Table 1 such that attention is focused on the atomic fraction of each of Fe and Ta.

The reason why the composition fraction of each soft magnetic thin film is expressed such that nitrogen is omitted lies in that the analytical accuracy of nitrogen is unsatisfactory as compared with those of the other elements. Hereinafter the composition is expressed such that the sum of the atomic fractions of component elements except for nitrogen is 100 %.

In any composition, the atomic fraction of the nitrogen with which the soft magnetic characteristic can be realized satisfies a range from 5 % to 12 %.

As can be understood from Fig. 1, there is a composition range in which a satisfactory soft magnetic characteristic that the coercive force is 40 A/m or smaller in a region in which the atomic fraction of Ta is 5 % to 7 %. A fact is known that Ta is an element which enhances amorphous formation in a film which must be formed. The reason why a satisfactory soft magnetic characteristic cannot be obtained in a region in which the atomic fraction of Ta is 5 % to 7 % lies in that an amorphous structure before heat treatment required for the thin microcrystal deposition type soft magnetic thin film is not formed in the foregoing region.

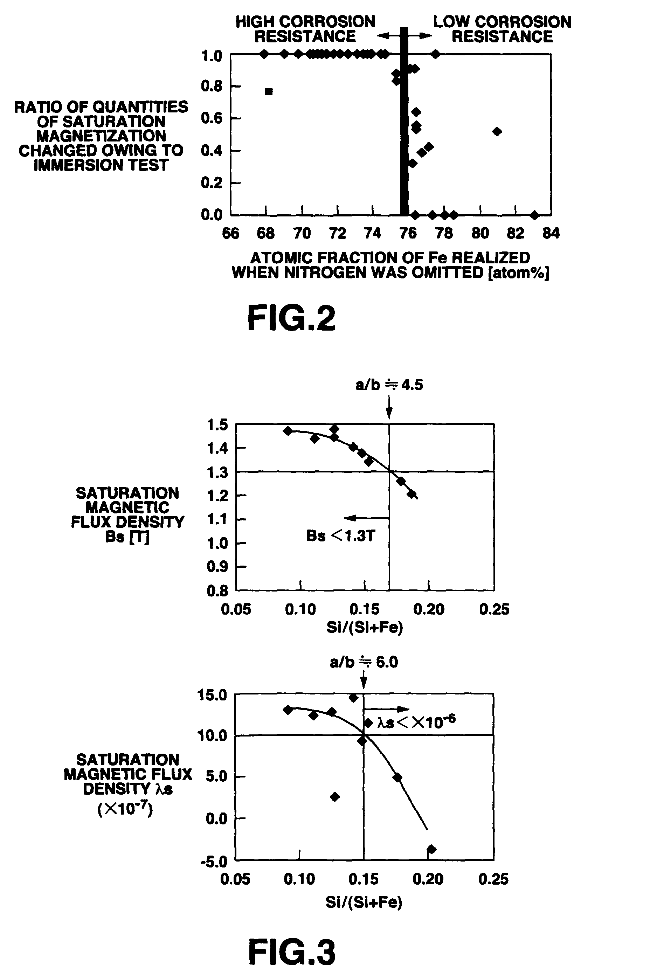

Fig. 2 is a graph formed by plotting ratios of quantities of saturation magnetization changed due to immersion of all of the thin magnetic films shown in Tables 1 to 4 in 0.5 N NaCl solution for 200 hours with respect to the atomic fraction of Fe.

The thin magnetic film of a type having the quantity of saturation magnetization which is one is free from corrosion. As the ratio is raised, the degree of corrosion becomes greater.

As can be understood from Fig. 1, higher saturation magnetic flux density Bs can be obtained as the atomic fraction of Fe is raised. As can be understood from Fig. 2, the corrosion resistance deteriorates in a region in which the atomic fraction of Fe is higher than 76 % on the assumption that the sum of the atomic fractions of component elements except for nitrogen is 100 %.

Fig. 3 shows change in the saturation magnetic flux density and the saturation magnetostrictiion constant caused by the sum of the atomic fraction of Si and that of Fe.

When the sum satisfies a range from 0.1 to 0.21, a soft magnetic characteristic with which Hc < 80 A/m or lower can be obtained. The following fact has been detected. That is, it is preferable that the foregoing composition ratio (the sum) satisfies a range from 0.15 to 0.17 to make the saturation magnetic flux density to be 1.3 T or higher and to make the saturation magnetostrictiion constant to be 1 × 10⁻⁶ or smaller.

The foregoing composition range is translated into about 4.5 < a/b < 6.0 in the composition formula FeₐSi_{b}Ta_{c}Ru_{d}GaₑN_{f}.

Similarly to Ta, Si is an element which is able to contribute to forming an amorphous structure before heat treatment. Therefore, an influence of reduction in the atomic fraction of Ta can somewhat be compensated by raising the atomic fraction of Si.

The saturation magnetic flux density Bs of Ru is not reduced considerably with respect to enlargement of addition. Moreover, Ru is effective in improving corrosion resistance. As can be understood from Table 1, a soft magnetic characteristic of Hc < 80A/m can be obtained in a wide atomic fraction range of 0 atom% to 11 atom%. To realize higher saturation magnetic flux density, it is preferable that the atom% is 5 atom% or lower.

Ga is an element with which the magnetic anisotropy can be reduced and the corrosion resistance can be improved. As can be understood from Table 1, a soft magnetic characteristic of Hc < 80A/m can be obtained in an atom% range of 0 atom% to 5 atom%. To obtain higher saturation magnetic flux density, it is preferable that the atomic fraction is 3 atom% or lower.

As a result, it is preferable that when the soft magnetic thin film is expressed by a composition formula as FeₐSi_{b}Ta_{c}Ru_{d}GaₑN_{f} (where each of a, b, c, d, e and f is a value indicating the atom% of the corresponding element), the composition ranges satisfy:
62 atom% < a < 75 atom%
7 atom% < b < 18 atom%
3 atom% < c < 10 atom%
0 atom% ≤ d < 10 atom%
0 atom% ≤ e < 6 atom%
5 atom% < f < 12 atom%, and
b + c > 13 atom%.

When application to a magnetic head is considered, it is further preferable that the atomic fractions in the composition formula satisfy:
65 atom% < a < 70 atom%
10 atom% < b < 16 atom%
5 atom% < c < 9 atom%
0 atom% ≤ d < 5 atom%
0 atom% ≤ e < 3 atom%
5 atom% < f < 12 atom%, and
4.5 < a/b < 6.

When, for example, Hf is added as an element except for Fe, Si, Ta, Ru, Ga and N, a similar effect to that obtainable from Ta which forms a boundary layer of thin microcrystal grains in the thin magnetic film can be obtained. When Al, Cr, Ti or Co is added, solid solution is formed in the thin microcrystal grains. Therefore, reduction in the magnetic anisotropy and improvement in the corrosion resistance can be obtained similarly to Ga. Therefore, when at least any one of the metal elements Al, Cr, Ti, Co or Hf is added to the soft magnetic thin film according to the present invention by 0 atom% to 6 atom%, a similar soft magnetic characteristic and corrosion resistance can be obtained.

A specific example of application of the soft magnetic thin film according to the present invention to a MIG head will now be described with reference to the drawings.

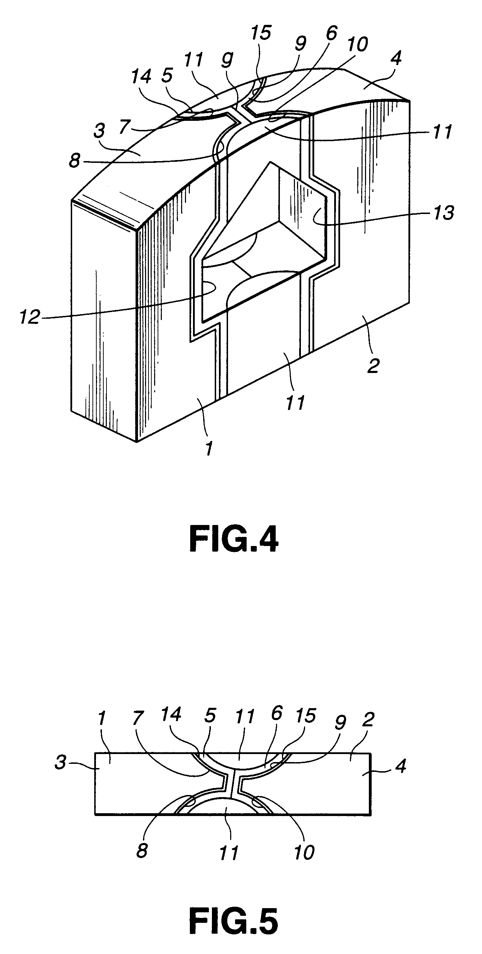

As shown in Fig. 4 and 5, the magnetic head according to the present invention has a structure that a magnetic gap g is formed at substantially the central portion of the surface which is brought into contact with the recording medium. A pair of right and left half bodies 1 and 2 of a magnetic core which are manufactured individually are joined to each other such that the magnetic gap g is formed between the half bodies 1 and 2 of the magnetic core. Therefore, the surfaces for forming the magnetic gap g are abutted against each other.

The half bodies 1 and 2 of the magnetic core incorporate bases 3 and 4, which are sub-cores, and thin metal magnetic films 5 and 6 which are main core portions.

The bases 3 and 4 are made of magnetic oxide material, such as Mn-Zn ferrite or Ni-Zn ferrite. The bases 3 and 4 serve as sub-core portions for constituting a closed magnetic passage in association with the thin metal magnetic films 5 and 6.

Circular-arc track-width limiting grooves 7, 8, 9 and 10 for limiting the track width Tw of the magnetic gap g are formed in the surfaces of the bases 3 and 4 opposite to the surfaces for forming the magnetic gap g. The track-width limiting grooves 7, 8, 9 and 10 are formed in a direction of the depth from portions adjacent to the two ends of the magnetic gap g.

Each of the track-width limiting grooves 7, 8, 9 and 10 is filled with non-magnetic material 11, such as glass. Thus, a satisfactory contact characteristic with the magnetic recording medium is realized and eccentric abrasion caused from sliding and contact can be prevented.

A groove 12 for a coil wire is formed in a surface of either of the bases 3 and 4 (the base 4 in this embodiment). The groove 12 has a substantially rectangular side shape to limit the depth of the magnetic gap g and permit winding of a wire to form a coil (not shown). Note that the groove 12 for the coil wire may similarly be formed in the base 3 as well as the base 4.

The thin metal magnetic films 5 and 6 serve as the main core portion for constituting the closed magnetic passage in association with the bases 3 and 4. The thin metal magnetic films 5 and 6 are formed in the opposite surfaces of the bases 3 and 4 in a direction from a front gap portion to a back gap portion. Therefore, the opposite surfaces of the thin metal magnetic films 5 and 6 serve as the surfaces of the half bodies 1 and 2 of the magnetic core for forming the magnetic gap g.

The thin metal magnetic films 5 and 6 are formed on the surface of the inside portions of the track-width limiting grooves 7, 8, 9 and 10 as well as the opposite surfaces of the bases 3 and 4. The thin metal magnetic films 5 and 6 may be formed on the overall surface of the inside portion of the groove 12 for the coil wire or at least a portion of the same.

MIG heads incorporating soft magnetic thin films each having the composition expressed as FeₐSi_{b}Ta_{c}Ru_{d}GaₑN_{f} were manufactured to evaluate the characteristics.

The thin metal magnetic films 5 and 6 were manufactured by using a target containing Fe by 74.0 atom%, Si by 15.0 atom%, Ru by 2.5 atom%, Ga by 1.0 atom% and Ta by 7.5 atom%. Then, DC sputtering was performed in an argon atmosphere to which 10 mol% nitrogen was added. The coercive force Hc of each of the manufactured soft magnetic thin films was 15 A/m. The saturation magnetic flux density Bs was 1.35 T. The permeability µ_{Hard} in the direction of the hard axis was 3200. If the thin metal magnetic film is directly formed on each of the bases 3 and 4, a diffusion reaction takes place between ferrite and the thin magnetic film. Thus, a pseudo gap is undesirably formed. Therefore, it is preferable that the thin metal magnetic film is formed through a reaction preventive film.

To make comparisons, a MIG head was manufactured which incorporated a soft magnetic thin film which was thin microcrystal deposition-type metal magnetic film (Hc = 15 A/m, Bs = 1.6 T and µ_{Hard} = 4500) having a composition containing Fe by 78 atom%, Ta by 10 atom% and Ni by 2 atom%. Another MIG head was manufactured which incorporated a soft magnetic thin film which was thin microcrystal metal magnetic film (Hc = 25 A/m, Bs = 1.1 T and µ_{Hard} = 1500) having a composition containing Fe by 66 atom%, Si by 14 atom%, Ru by 8 atom% and Ga by 12 atom%. Thus, the recording/reproducing characteristics were compared with those of the foregoing MIG head.

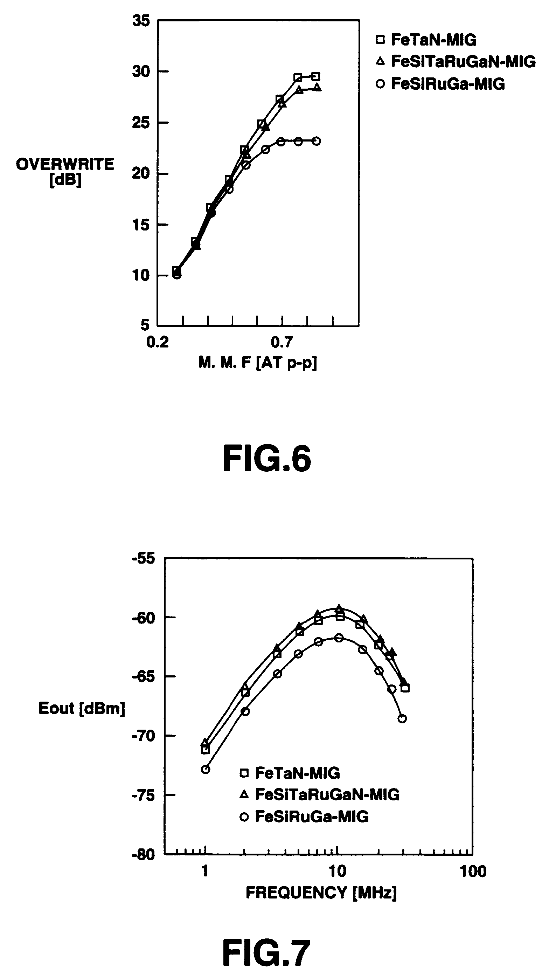

Fig. 6 shows results of measurement of an overwriting characteristic by using a magnetic recording medium having coercive force of 132 kA/m and incorporating a magnetic layer, the thickness of which was 0.53 µm. Fig. 7 shows results of dependency of the reproduction output on the frequency.

As compared with the MIG head incorporating the crystal soft magnetic thin film, the MIG head incorporating the soft magnetic thin film according to the present invention has an excellent overwriting characteristic because the head incorporates the soft magnetic thin film which exhibits a high saturation magnetic flux density. Moreover, high reproduction outputs can be obtained in the overall frequency range owing to the satisfactory soft magnetic characteristic. Thus, similar recording/reproducing characteristics to those of the MIG head incorporating the thin microcrystal deposition-type metal magnetic film containing Fe as the core thereof can be realized.

The MIG heads having the three types of the soft magnetic thin films were immersed in 0.5 N NaCl solution for one hour. Then, each surface on which the magnetic recording medium slid was observed. As a result, the MIG head incorporating the thin microcrystal deposition-type metal magnetic film containing Fe as the core thereof encountered corrosion of the surface of the soft magnetic thin film. On the other hand, the MIG head incorporating the soft magnetic thin film according to the present invention was free from corrosion similarly to the crystal-type soft magnetic thin film. As a result, satisfactory reliability was realized.

As a result, application of the soft magnetic thin film according to the present invention to the MIG head attains excellent recording/reproducing characteristic and satisfactory reliability.

As described above, the soft magnetic thin film according to the present invention exhibits a high saturation magnetic flux density and excellent soft magnetic characteristics. Moreover, sufficient corrosion resistance can be realized.

Therefore, provision of the soft magnetic thin film according to the present invention for the magnetic head enable a magnetic head excellent in the recording/reproducing characteristic and reliably.

Although the invention has been described in its preferred form and structure with a certain degree of particularity, it is understood that the present disclosure of the preferred form can be changed in the details of construction and in the combination and arrangement of parts without departing from the spirit and the scope of the invention as hereinafter claimed.

## Claims

1. A soft magnetic thin film comprising:
a material expressed by a composition formula FeₐSi_{b}Ta_{c}Ru_{d}GaₑN_{f} (where each of a, b, c, d, e and f is a value indicating the atom% of the corresponding element), wherein the composition ranges are as follows:
62 atom% < a < 75 atom%
7 atom% < b < 18 atom%
3 atom% < c < 10 atom%
0 atom% ≤ d < 10 atom%
0 atom% ≤ e < 6 atom%
5 atom% < f < 12 atom%, and
b + c > 13 atom%.

2. A soft magnetic thin film according to claim 1, wherein the composition ranges are
65 atom% < a < 70 atom%
10 atom% < b < 16 atom%
5 atom% < c < 9 atom%
0 atom% ≤ d < 5 atom%
0 atom% ≤ e < 3 atom%
5 atom% < f < 12 atom%, and
4.5 < a/b < 6.

3. A soft magnetic thin film according to claim 1, wherein at least any one of Al, Cr, Ti, Co and Hf is contained by 6 atom% or lower.

4. A magnetic head having a closed magnetic passage constituted by a magnetic core and a magnetic gap formed in said closed magnetic passage, said magnetic head comprising:
a soft magnetic thin film which constitutes at least a portion of said magnetic core, wherein
said soft magnetic thin film is composed of a material expressed by a composition formula FeₐSi_{b}Ta_{c}Ru_{d}GaₑN_{f} (where each of a, b, c, d, e and f is a value indicating the atom% of the corresponding element), wherein the composition ranges are as follows:
62 atom% < a < 75 atom%
7 atom% < b < 18 atom%
3 atom% < c < 10 atom%
0 atom% ≤ d < 10 atom%
0 atom% ≤ e < 6 atom%
5 atom% < f < 12 atom%, and
b + c > 13 atom%.
